# EUROPEAN PATENT SPECIFICATION

(11) **EP 3 007 969 B1**
(45) Date of publication and mention of the grant of the patent: **01.01.2020**
(21) Application number: 13886702.3
(22) Date of filing: 10.06.2013
(51) Int. Cl.: B64C 1/12, B29C 70/30, B64C 1/06, B64C 3/18, B64C 3/20, B64C 3/26, B29C 70/44, B29C 70/34, B29C 70/54, B29L 31/08, B29L 31/30, F03D 1/06, B64C 1/00

(54) **MANUFACTURING METHOD FOR STRINGER REINFORCED COMPOSITE SKIN AND APPARATUS**
HERSTELLUNGSVERFAHREN EINER STRINGERVERSTÄRKTE VERBUNDHAUT UND VORRICHTUNG
PROCÉDÉDE FABRICATION DE PEAU COMPOSITE RENFORCÉE PAR DES LISSES ET DISPOSITIF

(43) Date of publication of application: 20.04.2016
(73) Proprietor: SAAB AB, 581 88 Linköping (SE)
(72) Inventor: LINDBÄCK, Jan-Erik, S-587 29 Linköping (SE); PETERSSON, Mikael, S-589 51 Linköping (SE); WAARA, Jan, S-582 75 Linköping (SE); JOHANSSON, Peter, S-582 44 Linköping (SE)
(74) Representative: Zacco Sweden AB
(86) International application number: PCT/SE2013/050655
(87) International publication number: WO 2014/200393

(56) References cited:
- EP-A1- 2 556 946
- WO-A1-02/20248
- WO-A1-2010/092309
- WO-A1-2012/007780
- DE-A1- 3 418 110
- DE-A1- 3 418 110
- FR-A1- 2 440 831
- US-A1- 2005 178 083
- US-A1- 2007 175 171

## Description

### TECHNICAL FIELD

The present invention relates to a manufacturing method and an apparatus for manufacture stringer reinforced composite skins.

### BACKGROUND

Airplane structures are generally comprised of skins strengthened by strengthening elements. The manufacture of structures for airplanes comprising skins strengthened by strengthening elements such as stringers typically require extensive fixtures and manual assembly procedures, as the strengthening elements are often manufactured separately from the skin and fixed onto the skin later in the manufacturing process. The involvement of manual operations in the manufacturing procedure may be disadvantageous to the quality of the products. Furthermore, this manufacturing procedure may not be cost effective as the manual assembly is often labour-intensive and time consuming.

Airplane composite structures comprising skins strengthened by strengthening elements are commonly manufactured using a mould. The mould provides the basic shape of the structure. The mould is typically dressed with fibre reinforced resin. The fibres are often carbon fibres preimpregnated with a resin material such as epoxy.

WO 2010/092309 discloses a method for manufacture of stringer reinforced composite skins whereby a forming tool is provided with elongated support members. A fibre placement step applies fibre reinforced resin onto the forming tool and fibre reinforced blank materials for stringers are cut out.

EP1216816 discloses a composite material-stiffened panel and a method for manufacture of a composite material stiffened panel. The composite material stiffened panel disclosed includes a skin, stiffeners arranged in rows on one surface of the skin and a fibre reinforced skin stitched onto the skin and covering the stiffeners. The composite stiffener panel is manufactured by placing a first fabric material on a shaped tool, placing stiffeners on the first fabric material and placing thereon a second fabric material to cover at least some of the stiffeners, and stitching the second fabric material to the first fabric material. In this manufacturing method resin is infiltrated into the fabric material and hardened so as to provide the composite material-stiffened panel.

US20080196825 discloses a method for manufacture of hollow components such as sections of airplane fuselage from composite material that includes a skin and optional strengthening elements. The method uses a fibre placement head to place strips of several fibres preimpregnated with resin to form a composite material skin inside a mould.

The above mentioned documents describe methods for the manufacture of structures comprising a skin strengthened by strengthening elements and are to be considered related art in the field.

### SUMMARY OF THE INVENTION

One objective of the present invention is to provide an improved and advantageously automatic method for manufacture of stringer reinforced composite skins.

The method for manufacture of stringer reinforced composite skins, of the present invention, includes the consecutive steps of: providing a forming tool comprising elongated support members spaced apart by means of elongated dummy members. The support and dummy members may be assembled side by side longitudinally such that the long sides of the support and dummy members are essentially parallelly aligned. In a first fibre placement step fibre reinforced resin is placed onto said forming tool, to form a fibre reinforced skin on said forming tool. The fibre reinforced skin is cut along the longitudinal extension of the dummy members so as to cut out fibre reinforced blank materials for stringer members. The dummy members are removed. The fibre reinforced blank materials are formed so that the fibre reinforced blank materials are shaped around said support members to form stringer members. The stringer members are assembled by longitudinally bringing together the stringer members so that the long sides of the stringer members are essentially parallelly aligned, to form a stringer unit. In a second fibre placement step fibre reinforced resin is placed onto said stringer unit, to form a fibre reinforced skin onto said stringer unit. The fibre reinforced skin and said stringer unit are co-cured to form a stringer reinforced composite skin. The support members are then removed from said stringer reinforced composite skin.

The manufacturing method described above provides stinger reinforced composite skins of enhanced quality, by minimizing manual operations in the steps of the manufacturing process.

Each support member of the forming tool is in one option a support block and a plate, wherein the plate is arranged along the length of the support block so as to enclose at least the upper portion of the support block. The support block of the support member may be removed prior to the curing step and the caul plates of the support member may be removed after curing.

The plates herein after referred to as a caul plates may in one example have an L-profile and/or U-profile. The caul plates comprise a bottom plate and at least one edge which is arranged upstanding relative to the bottom plate.

The dummy members of the forming tool are in one option arranged as to space apart each of the support members. The dummy members may be solid blocks and shaped to fit parallelly in between the support members. Dummy members arranged at the edge of the forming tool may be shaped to parallel with one support member on one side of the dummy member. The dummy members may be removed either prior or subsequent to the cutting step.

In the first fibre placement steps of the method a preferably continuously fibre reinforced skin is in one option deposited and/or laid up onto the forming tool. The step of placing fibre reinforced resin onto the forming tool may be performed by placing preimpregnated fibres. The fibre placement step may further be performed by means of Automated Tape Layering (ATL) or Advanced Fibre Placement (AFP). The fibre placement step may also include placing fibres in a plurality of layers along a plurality of directions.

In the method the step of cutting the fibre reinforced skin into fibre reinforced blank materials in one option follows after the fibre placement step. The fibre reinforced skin may be cut along the longitudinal extension of the dummy members. The cut out fibre reinforced blank materials make out the blank materials for the stringer members. The cutting step is in one example performed by means of an ultrasonic knife. The dummy members of the forming tool may be removed prior or subsequent to the cutting step.

Following the cutting step and the removal of the dummy members, the fibre reinforced blank materials are in one option shaped around said support members to form stringer members. The step of forming the fibre reinforces blank materials into stringer members may be performed by means of hot drape forming (HDF). The stringer members are in one option assembled by longitudinally bringing together said stringer members such that the long sides of the stringer members are essentially parallelly aligned, to form a stringer unit.

In the second fibre placement step of the method a preferably continuously fibre reinforced skin is in one option deposited or laid up onto the stringer unit. The step of placing fibre reinforced resin onto the stringer unit may be performed by placing preimpregnated fibres. The fibre placement step may further be performed by means of ATL or AFP. The fibre placement step may also include placing fibres in a plurality of layers along a plurality of directions.

Co-curing of the stringer unit and the fibre reinforced skin may be performed by means of a curing tool customized to accommodate the fibre reinforced skin and the stringer unit. The co-curing step may further be performed in an autoclave oven. The co-cured stringer unit and fibre reinforced skin form the stringer reinforced composite skin.

In one example an apparatus for manufacture of stringer reinforced composite skin comprises a: Forming tool comprising elongated support members spaced apart by means of elongated dummy members. The support and dummy members are assembled side by side longitudinally such that the long sides of the support and dummy members are essentially parallelly aligned. The apparatus further comprises fibre placement means, for placing fibre reinforced resin. The apparatus further comprises cutting means for cutting out fibre reinforced blank materials for stringer members and removing means for removing support and/or dummy members. The apparatus further comprises forming means for forming the fibre reinforced blank materials so that the fibre reinforced blank materials are shaped around the support members to form stringer members. The apparatus further comprises assembling means for assembling the stringer members, by longitudinally bringing together the stringer members such that the long sides of the stringer members are essentially parallelly aligned, to form a stringer unit. The apparatus further comprises curing means for co-curing the fibre reinforced skin and the stringer unit to form a stringer reinforced composite skin.

The manufacture method and apparatus for stringer reinforced composite skin as described above may be used for the manufacture of vehicle structures such as airplane structures as well as wind turbines and other structures. The manufacturing method and apparatus may be part of an automatic production line for the manufacture of stringer reinforced composite skins.

### BRIEF DESCRIPTION OF THE DRAWINGS

Figure 1 is an overview of the steps of one example of a method for manufacture of stringer reinforced composite skins;
Figure 2 is a perspective view of a forming tool comprising support members including support blocks and caul plates and dummy members;
Figure 3 is a perspective view of a fibre reinforced skin placed onto the forming tool;
Figure 4 is a perspective view of cut out fibre reinforced blank materials for stringer members;
Figure 5 is a perspective view illustrating removal of the dummy member;
Figure 6 is a perspective view of fibre reinforced blank materials shaped around the support members;
Figure 7 is a perspective view of fibre reinforced skin placed onto the stringer unit resting onto the forming tool;
Figure 8 is a perspective view of the fibre reinforced skin placed onto a stringer unit resting onto a curing tool including the caul plates and support blocks (being removed) of the forming tool;
Figure 9 is a perspective view of the fibre reinforced skin placed onto a stringer unit resting onto a curing tool including the caul plates

### DETAILED DESCRIPTION

The present invention is directed to a method and an apparatus for improved and advantageously automatic manufacturing of stringer reinforced composite skins of enhanced quality. The method includes the consecutive steps of: providing a forming tool comprising elongated support members spaced apart by means of elongated dummy members. The support and dummy members may be assembled side by side longitudinally such that the long sides of the support and dummy members are essentially parallelly aligned. In a first fibre placement step fibre reinforced resin is placed onto said forming tool, to form a fibre reinforced skin on said forming tool. The fibre reinforced skin is cut along the longitudinal extension of the dummy members so as to cut out fibre reinforced blank materials for stringer members. The dummy members are removed. The fibre reinforced blank materials are formed so that the fibre reinforced blank materials are shaped around said support members to form stringer members. The stringer members are assembled by longitudinally bringing together the stringer members so that the long sides of the stringer members are essentially parallelly aligned, to form a stringer unit. In a second fibre placement step fibre reinforced resin is placed onto said stringer unit, to form a fibre reinforced skin onto said stringer unit. The fibre reinforced skin and said stringer unit are co-cured to form a stringer reinforced composite skin. The support members are then removed from said stringer reinforced composite skin.

The forming tool of the present invention may comprise support and dummy members. The support members may be made of solid/massive blocks and/or hollow blocks. The dummy members may be made of solid/massive blocks and/or hollow blocks. The members are in one example elongated shaped. At least some of the members are in one example tapered. The support and dummy members may be made from metallic materials and/or composite materials. The support and dummy members may further include lengthwise extending recesses on at least the vertical edges of the members. A recess on the at least a vertical edges of the support and dummy members enables the members to be coupled together. The support and dummy members may be assembled side by side longitudinally such that the long sides of the support and dummy members are essentially parallelly aligned. Dummy members arranged at the edge of the forming tool may be shaped to parallel with one support member on one side of the dummy member. The forming tool may be shaped in the form of a specific structure to be formed in the manufacturing.

At least some of the support members comprise in one example a support block and a caul plate. The caul plates may be arranged along the length of the support block so that each caul plate encloses at least the upper portion of the support block. The caul plates may for example be shaped in the form of U-profiles and/or L-profiles. Each caul plate is in one example clamped onto its associated support block to form the support member. The caul plates may be made from a metallic material and/or a composite material. The forming tool comprising support members including support blocks and caul plates may enhance the variability of the forming tool, as the support blocks and caul plates may be removed independently of one another in the steps of the manufacturing. The support blocks of the support members are advantageously removed prior to the curing step and the caul plates of the support member are advantageously removed after curing. The caul plates may have advantageous effects on the curing process.

In one example the forming tool comprises a first tool and a second tool. The first tool comprises support and dummy members assembled side by side longitudinally such that the long sides of the support and dummy members are essentially parallelly aligned. The second tool comprises an enclosure, enclosing the fist tool, so that the first and the second tool together form a mould having a mould cavity. The forming tool according to this example will hereinafter be referred to as a moulding tool.

The step of placing fibres (the first and/or the second fibre placement step) onto the forming tool and/or onto the moulding tool may be performed using a variety of techniques. Fibre reinforced resin material may be placed onto the forming tool and/or into the moulding tool.

The technique of Automated Tape Layering (ATL) may be used in the fibre placement step. Using ATL unidirectional or multidirectional reinforced preimpregnated tapes of optional width can be deposited, draped and/or laid up in layers to form composite depositions/layups onto the outer surface of the forming tool. The technique of Advanced Fibre Placement (AFP) resembles ATL, however AFP allows for smaller and more complex structures to be produced. Both ATL and AFP deposition/layup can be applied in the fibre placement step according to the present invention.

Examples of fibre reinforcement materials for use in the fibre placement step are carbon fibres, glass fibres, Kevlar fibre or woven fabrics or combinations thereof. Also other high strength and light weight fibre materials may be used. Multidirectional fibres may be arranged ordered for example in the form of ordered networks or be oriented randomly. The fibres may further be twisted or untwisted. The fibres may be placed onto the forming tool or in the moulding tool in a plurality of layers and advantageously in multiple directions. The reinforcement material may also be made of a fibre reinforcement material embedded resin. The resin used for preimpregnated fibres may for example be a thermosetting epoxy material.

Following the fibre placement step, the crude fibre reinforced skin placed onto the forming tool may be cut into fibre reinforced blank materials. The crude fibre reinforced skin may be cut along the longitudinal extension of the dummy members. In one example of the manufacture method of the present invention the upper side of the dummy members make out a support surface for cutting out the fibre reinforced blank materials. The cutting step may be performed by means of an ultrasonic knife, wherein the cutting action is obtained by means of abrasive slurry flowing between the vibrating tip of a transducer and the crude fibre reinforced skin. Cutting by means of ultrasonic knife is advantageous as high precision cutting can be performed and since cutting can be performed in the absence of heating and exerting low stress onto the material being cut. In another example the fibre reinforced blank materials may be punched out from the fibre reinforced skin. In yet another example of the dummy blocks may be removed prior to the cutting step. The fibre reinforced blank materials may in addition to the cutting procedures described above in this example be cut out by means of a cutting tool such as a scissor or saw blade. The cut out fibre reinforced blank materials make out the blank material for the stringer members.

The cut out fibre reinforced blank materials may be resilient to bending under gravity, upon removal of the dummy members in the cutting step. Thus, the fibre reinforced blank materials may be shaped around the support members to form stringer members in the forming step. The forming step of the method of the present invention may be performed by means of hot drape forming (HDF); however the forming step is not restricted to this forming technique. In HDF the fibre reinforced blanks resting on the support members of are clamped to the support member and heated while monitoring the temperature applied and the temperature of the fibre reinforced blank material heated. Vacuum may be applied in the HDF process to pull the material tight onto the surface of the forming tool.

The stringer members formed in the forming step may be assembled by longitudinally bringing them together such that the long sides of the stringer members are essentially parallelly aligned. The assembled stringer members make out a stringer unit. In another example of the stringer members may be arranged spaced apart in rows and/or such that they intersect one another forming a network.

In the second fibre placement step a preferably continuously fibre reinforced skin is deposited or laid up onto the stringer unit. The step of placing fibre reinforced resin onto the stringer unit may be performed by placing preimpregnated fibres. The fibre placement step may further be performed by means of ATL or AFP. The fibre placement step may also include placing fibres in a plurality of layers along a plurality of directions.

Co-curing of the stringer unit and the fibre reinforced skin may be performed by means of a curing tool customized to accommodate the fibre reinforced skin and the stringer unit. The co-curing step may further be performed in an autoclave oven, wherein the temperature, pressure and/or vacuum may be controlled along with various product parameters during the curing process. In the curing process the crude preimpregnated fibre reinforced materials are polymerized and hardened. The co-cured stringer unit and fibre reinforced skin make out the stringer reinforced composite skin product of the manufacturing method. The curing step is followed by controlled cooling of the stringer reinforced composite skin produced.

In one example the support blocks of the support members are removed prior to the curing step while as the caul plates of the support members are included in the curing step. Including the caul plates in the curing step may have advantageous effect on the curing process. In another example the support members including the support blocks are included in the curing step.

The steps of the manufacture method disclosed above may be performed manually or in an automated process.

The manufacture of stringer reinforced composite skin as described above may be performed by means of an apparatus comprising a: forming tool comprising elongated support members spaced apart by means of elongated dummy members. The support and dummy members may be assembled side by side longitudinally such that the long sides of the support and dummy members are essentially parallelly aligned. The apparatus further comprises fibre placement means, for placing fibre reinforced resin. The apparatus further comprises cutting means for cutting out fibre reinforced blank materials for stringer members and removing means for removing support and/or dummy members. The apparatus further comprises forming means for forming the fibre reinforced blank materials so that the fibre reinforced blank materials are shaped around the support members to form stringer members. The apparatus further comprises assembling means for assembling the stringer members, by longitudinally bringing together the stringer members such that the long sides of the stringer members are essentially parallelly aligned, to form a stringer unit. The apparatus further comprises curing means for co-curing the fibre reinforced skin and the stringer unit to form a stringer reinforced composite skin.

The stringer reinforced skin manufactured according to the steps of the method and/or the apparatus disclosed above may be used for the manufacture airplane structures, wind turbines and other light weight and high durability structures. The manufacturing method and apparatus may also be part of an automatic production line for the manufacture of stringer reinforced composite skins.

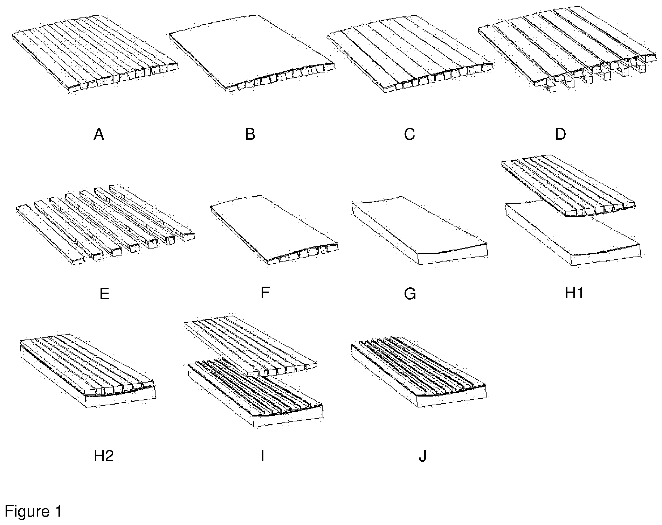

Referring now to the figures, Figure 1 illustrates an overview of the steps of the method according to one example of the present invention. From left to right in Figure 1 the following steps are illustrated: A) Providing a forming tool including support members and dummy members. B) Placing fibers, in a first fiber placement step, onto the forming tool to form a fiber reinforced skin. C) Cutting out fiber reinforced blank materials for stringer members. D) Removing the dummy members. E) Forming the fiber reinforced blank materials into stringer members. F) Assembling the stringer members to form a stringer unit and placing fibers, in a second fiber placement step, onto the stringer unit to form a fiber reinforced skin 8. G) Providing a curing tool. H1 and H2) Placing the stringer unit having a fiber reinforced skin placed on to it on the curing tool. I) Removing the support blocks. J) Co-curing the stringer unit and the fiber reinforced skin to form the stringer reinforced composite skin. Removing the caul plates of the support member (not illustrated in Figure 1). Receiving the stringer reinforced composite skin.

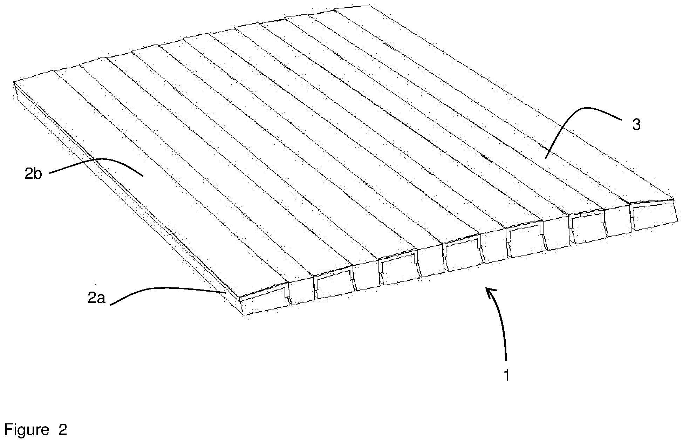

Figures 2 to 9 illustrates perspective views of the major steps of the method summarized in the overview in Figure 1. Figure 2 illustrates a forming tool 1 adapted to shape fibre reinforced resin placed onto said forming tool. Support and dummy members 2 (2a and 2b) respective 3 together make out the forming tool 1. The arrangement of the individual support and dummy members 2, 3 of the forming tool 1 make the tool adaptive and variable. In the example in Figure 2 each support member includes a support block 2a and a caul plate 2b. The addition of support members made up of support blocks 2a and caul plates 2b in the forming tool 1 allows for the forming tool 1 to be further adapted to the manufacturing process of the stringer reinforced composite skin, as the support block 2a and caul plates 2b of the support member 2 may be removed independent of one another in the different steps of the method. The forming tool 1 as described above makes the method alterable, which enables the manufacture of stringer reinforced composite skin of high quality.

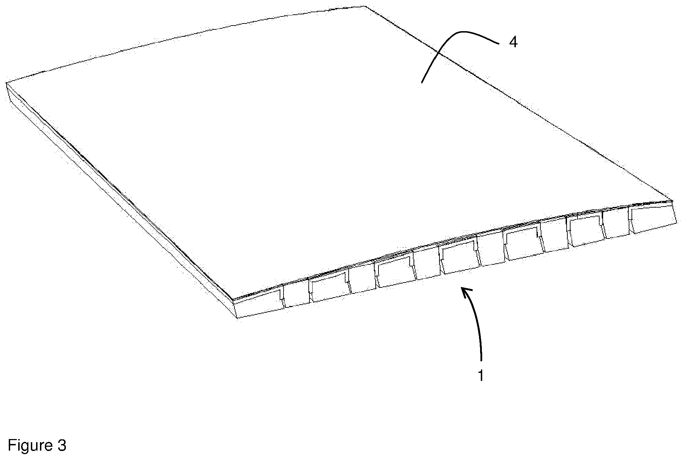

A fibre reinforced skin 4 illustrated in Figure 3 may in the first fibre placement step of the method be placed onto the forming tool 1. A variety of different fibre placement methods and processes can be used in and the fibre placement step. The fibre placement step is not restricted to any specific fibre placement technique or process. The fibre placement step may for example be performed by means of placing fibre reinforced resin onto the forming tool 1. The fibre reinforced skin 4 placed on to the forming tool 1 advantageously consisting of preimpregnated fibres that form a continuous skin on the forming tool 1.

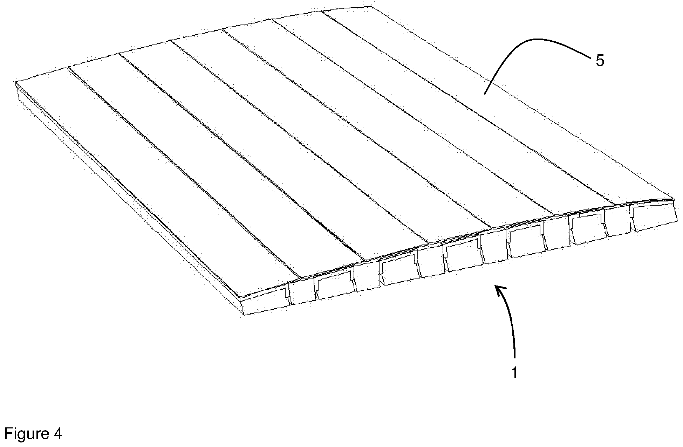

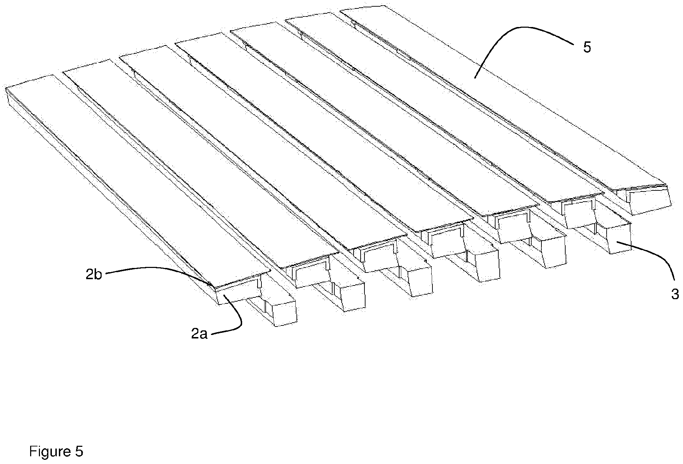

The fibre reinforced skin illustrated in Figure 3 may in the cutting step of the method be cut into fibre reinforced blank materials 5 for stringer members as illustrated in Figure 4. The fibre reinforced blank materials for stringer members may be cut out from the fibre reinforced skin using a variety of cutting techniques such as cutting by ultrasonic knife. Figure 4 illustrates the step of cutting the fibre reinforced skin 4 along the longitudinal extension of the dummy members so as to cut out fibre reinforced blank materials 5 for stringer members. Figure 5 illustrates the removal of the dummy members 3. The dummy members 3 are in this example removed after cutting the fibre reinforced skin 4 into fibre reinforced blanks 5. In another example of the method of the present invention the dummy members may be removed prior to the cutting step.

The cut out fibre reinforced blanks 5 illustrated in Figure 5, are in this example illustrated as being resilient to bending under gravity upon removal of the dummy members 3, as seen in Figure 5. Thus the fibre reinforced blanks 5 needs to be shaped around the support members 2 to form stringer members 6 in the forming step of the method. The forming step may be performed by means of for example HDF however the forming step is not restricted to this forming technique.

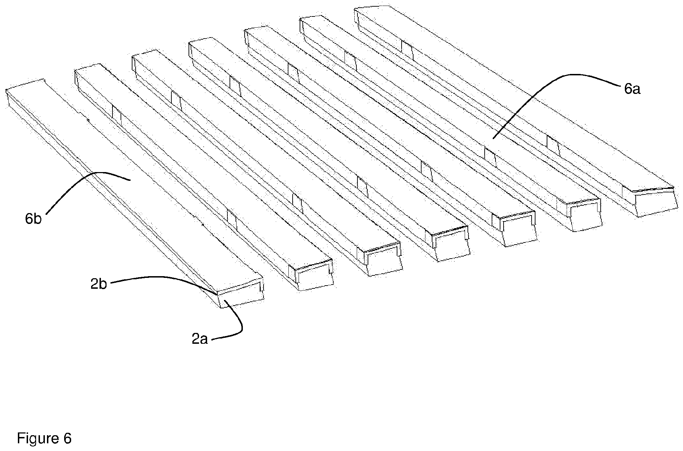

Figure 6 illustrates the stringer members 6 (6a and 6b) shaped in the forming step. The stringer members may in this example be shaped in the form of U-profiles 6a and/or L-profiles 6b, depending on the design and assembly of the support and dummy members of the forming tool. The stringer members resting on the support members are prior to the second fibre placement step assembled to form a stringer unit 7. The stringer members 6 are preferably assembled by longitudinally bringing together said stringer members such that the long sides of the stringer members are essentially parallelly aligned.

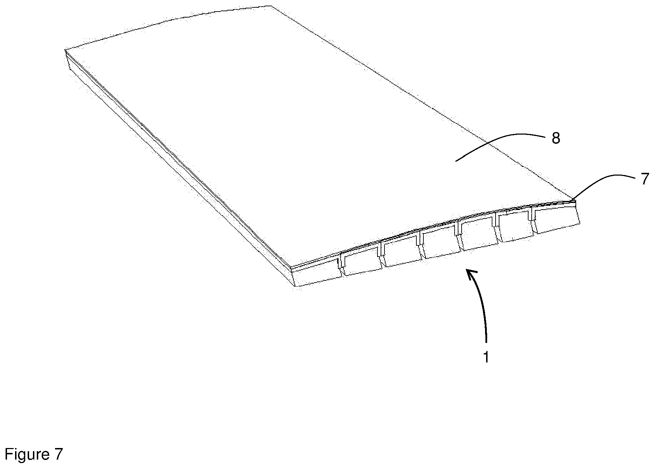

In the second fibre placement step consecutive to the assembly step a fibre reinforced skin 8 may be places onto the stringer unit 7, illustrated in Figure 7. A variety of different fibre placement methods and processes can be used. The fibre placement step of the method of the present invention is not restricted to any specific fibre placement technique or process. The fibre placement step may for example be performed by means of placing fibre reinforced resin onto the stringer unit 7. The fibre reinforced skin 8 placed onto the stringer unit 7 advantageously consisting of preimpregnated fibres that form a continuous skin onto the stringer unit 7.

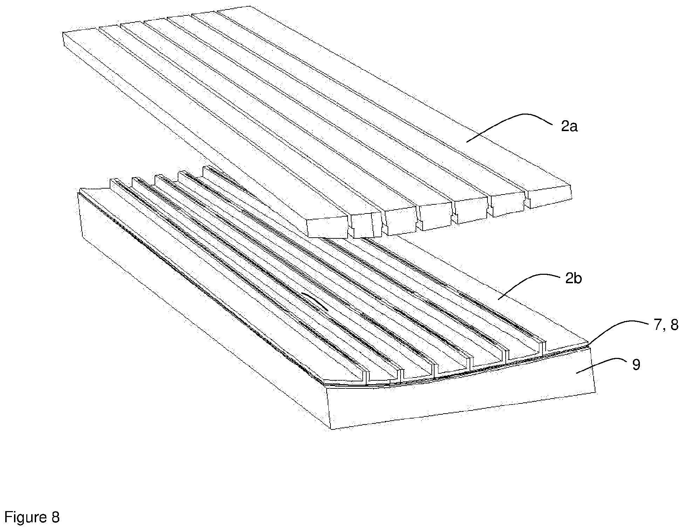

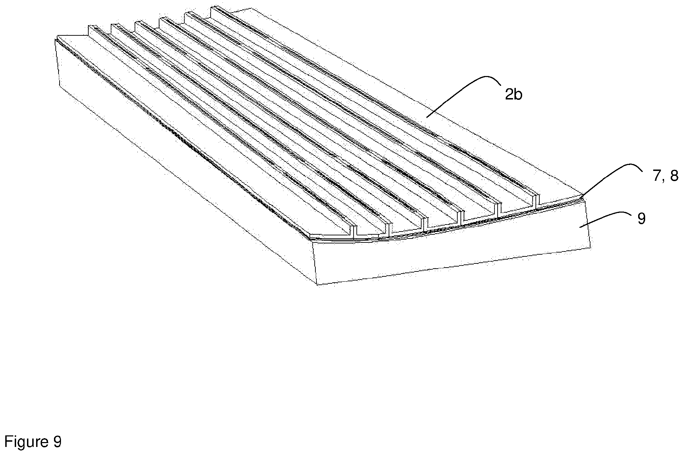

The support blocks 2a of the support members 2 may be removed prior to curing, illustrated in Figure 8. Figure 9 illustrates the co-curing step of the method of the present invention. In this example the stringer unit 7, the fibre reinforced skin 8, and the caul plates 2b are placed onto a curing tool 9. The caul plates may advantageously be included in the curing step. In another example the support members including the support blocks may be included in the curing step. The curing tool 9 may be customized to accommodate the fibre reinforced skin 8 and the stringer unit 7. The co-curing step may further be performed in an autoclave oven. The co-cured stringer unit 7 and fibre reinforced skin 8 form the stringer reinforced composite skin.

Subsequent to curing the caul plates 2b may be removed, leaving the stringer reinforced composite skin, resting on the curing tool. The stringer reinforced composite skin may then be collected from the curing tool 9.

## Claims

1. A method for manufacture of stringer reinforced composite skins **characterized in that** the method comprises the consecutive steps of:
providing a forming tool (1) comprising elongated support members (2) spaced apart by means of elongated dummy members (3), said support and dummy members (2, 3) being assembled side by side longitudinally such that the long sides of the support and dummy members (2, 3) are essentially parallelly aligned;
in a first fibre placement step placing fibre reinforced resin onto said forming tool (1), to form a fibre reinforced skin (4) on said forming tool (1);
cutting said fibre reinforced skin along the longitudinal extension of the dummy members (3), so as to cut out fibre reinforced blank materials (5) for stringer members (6);
removing said dummy members (3);
forming said fibre reinforced blank materials (5) so that the fibre reinforced blank materials (5) are shaped around said support members (2) to form stringer members (6);
assembling said stringer members (6), by longitudinally bringing together said stringer members such that the long sides of the stringer members are essentially parallelly aligned, to form a stringer unit (7);
in a second fibre placement step placing fibre reinforced resin onto said stringer unit (7), to form a fibre reinforced skin (8) onto said stringer unit (7);
co-curing said fibre reinforced skin (8) and said stringer unit (7) to form a stringer reinforced composite skin; and
removing said support members (2) form said stringer reinforced composite skin.

2. The method for manufacture according to claim 1, wherein each support member (2) comprise a support block (2a) and a caul plate (2b), wherein said caul plate (2b) is arranged along the length of the support block(2a) so as to encloses at least the upper portion of the support block (2a).

3. The method of manufacture according to claim 2, wherein the support blocks (2a) are removed prior to the curing step, and wherein the caul plates (2b) of the support member (2) are removed after curing.

4. The method of manufacture according to anyone of the preceding claims, wherein the step of placing fibre reinforced resin comprises placing pre-impregnated fibres.

5. The method of manufacture according to anyone of the preceding claims, wherein the step of placing a fibre reinforced resin is performed by means of Automated Tape Layering (ATL) and/or Automated Fibre Placement (AFP).

6. The method of manufacture according to anyone of the preceding claims, wherein the step of placing a fibre reinforced skin comprises placing fibres in a plurality of layers along a plurality of directions.

7. The method of manufacture according to anyone of the preceding claims, wherein the fibre reinforced blank materials (5) for the stringer members (6) are cut out by means of an ultrasonic knife.

8. The method of manufacture according to anyone of the preceding claims, wherein the step of forming comprises performing hot drape forming (HDF).

9. The method of manufacture according to anyone of the preceding claims, wherein the step of co-curing is performed by means of a curing tool (9) customized to accommodate the fibre reinforced skin (8) and the stringer unit (7) which when co-cured form the stringer reinforced composite skin.

10. The method of manufacture according to anyone of the preceding claims, wherein the co-curing step is performed in an autoclave oven.

11. An apparatus for manufacture of stringer reinforced composite skin comprising:
a forming tool (1) comprising elongated support members (2) spaced apart by means of elongated dummy members (3), said support and dummy members (2, 3) being assembled side by side longitudinally such that the long sides of the support and dummy (2, 3) members are essentially parallelly aligned;
fibre placement means for placing fibre reinforced resin;
cutting means, for cutting out fibre reinforced blank materials (5) for stringer members (6), cutting said fibre reinforced skin along the longitudinal extension of the dummy members (3);
removing means for removing support and/or dummy members (2, 3),
forming means for forming the fibre reinforced blank materials (5) so that the fibre reinforced blank materials are shaped around the support members to form stringer members (6),
assembling means for assembling the stringer members (6), by longitudinally bringing together the stringer members (6) such that the long sides of the stringer members (6) are essentially parallelly aligned, to form a stringer unit (7),
curing means (9) for co-curing the fibre reinforced skin (8) and the stringer unit (7) to form a stringer reinforced composite skin.

12. An automatic production line using the method of manufacture according to anyone of claims 1 to 9.

## Patentansprüche

1. Verfahren zur Herstellung von stringerverstärkten Verbundhäuten, **dadurch gekennzeichnet, dass** das Verfahren die aufeinanderfolgenden Schritte umfasst:
Bereitstellen eines Formwerkzeugs (1), das längliche Stützelemente (2) umfasst, die mittels länglicher Blindelemente (3) beabstandet sind, wobei die Stütz- und Blindelemente (2, 3) in Längsrichtung nebeneinander montiert sind, so dass die Längsseiten der Stütz- und Blindelemente (2, 3) im Wesentlichen parallel ausgerichtet sind;
in einem ersten Faserplatzierungsschritt Platzieren von faserverstärktem Harz auf dem Formwerkzeug (1), um eine faserverstärkte Haut (4) auf dem Formwerkzeug (1) auszubilden;
Schneiden der faserverstärkten Haut entlang der Längserstreckung der Blindelemente (3), um faserverstärkte Rohmaterialien (5) für Stringerelemente (6) auszuschneiden;
Entfernen der Blindelemente (3);
Formen der faserverstärkten Rohmaterialien (5), so dass die faserverstärkten Rohmaterialien (5) zur Ausbildung von Stringerelementen (6) um die Stützelemente (2) geformt werden;
Montieren der Stringerelemente (6), indem die Stringerelemente in Längsrichtung derart zusammengeführt werden, dass die Längsseiten der Stringerelemente im Wesentlichen parallel ausgerichtet sind, um eine Stringereinheit (7) auszubilden;
in einem zweiten Faserplatzierungsschritt Platzieren von faserverstärktem Harz auf der Stringereinheit (7), um eine faserverstärkte Haut (8) auf der Stringereinheit (7) auszubilden;
Co-Härten der faserverstärkten Haut (8) und der Stringereinheit (7), um eine stringerverstärkte Verbundhaut auszubilden; und
Entfernen der Stützelemente (2) von der stringerverstärkten Verbundhaut.

2. Verfahren zur Herstellung nach Anspruch 1, wobei jedes Stützelement (2) einen Stützblock (2a) und eine Druckplatte (2b) umfasst, wobei die Druckplatte (2b) entlang der Länge des Stützblocks (2a) angeordnet ist, um zumindest den oberen Abschnitt des Stützblocks (2a) zu umschließen.

3. Herstellungsverfahren nach Anspruch 2, wobei die Stützblöcke (2a) vor dem Härtungsschritt entfernt werden, und wobei die Druckplatten (2b) des Stützelements (2) nach dem Härten entfernt werden.

4. Herstellungsverfahren nach einem der vorhergehenden Ansprüche, wobei der Schritt des Platzierens von faserverstärktem Harz das Platzieren von vorimprägnierten Fasern umfasst.

5. Herstellungsverfahren nach einem der vorhergehenden Ansprüche, wobei der Schritt des Platzierens eines faserverstärkten Harzes mittels automatischer Tapelegung (ATL) und/oder automatischer Faserlegung (AFP) durchgeführt wird.

6. Herstellungsverfahren nach einem der vorhergehenden Ansprüche, wobei der Schritt des Platzierens einer faserverstärkten Haut das Platzieren von Fasern in einer Vielzahl von Schichten entlang einer Vielzahl von Richtungen umfasst.

7. Herstellungsverfahren nach einem der vorhergehenden Ansprüche, wobei die faserverstärkten Rohmaterialien (5) für die Stringerelemente (6) mittels eines Ultraschallmessers ausgeschnitten werden.

8. Herstellungsverfahren nach einem der vorhergehenden Ansprüche, wobei der Schritt des Bildens das Durchführen von Hot Drape Forming (HDF) umfasst.

9. Herstellungsverfahren nach einem der vorhergehenden Ansprüche, wobei der Schritt des Co-Härtens mittels eines Härtungswerkzeugs durchgeführt wird (9), das zur Aufnahme der faserverstärkten Haut (8) und der Stringereinheit (7) gefertigt ist, die bei Co-Aushärtung die stringerverstärkte Verbundhaut bilden.

10. Herstellungsverfahren nach einem der vorhergehenden Ansprüche, wobei der Co-Härtungsschritt in einem Autoklavofen durchgeführt wird.

11. Vorrichtung zur Herstellung von stringerverstärkter Verbundhaut, umfassend:
ein Formwerkzeug (1), das längliche Stützelemente (2) umfasst, die mittels länglicher Blindelemente (3) beabstandet sind, wobei die Stütz- und Blindelemente (2, 3) in Längsrichtung nebeneinander montiert sind, so dass die Längsseiten der Stütz- und Blindelemente (2, 3) im Wesentlichen parallel ausgerichtet sind;
Faserplatzierungsmittel zum Platzieren von faserverstärktem Harz;
Schneidmittel zum Ausschneiden von faserverstärkten Rohmaterialien (5) für Stringerelemente (6), die die faserverstärkte Haut entlang der Längserstreckung der Blindelemente (3) schneiden,
Entnahmemittel zur Entnahme von Stütz- und/oder Blindelementen (2, 3),
Formmittel zum Formen der faserverstärkten Rohmaterialien (5), so dass die faserverstärkten Rohmaterialien zur Ausbildung von Stringerelementen (6) um die Stützelemente geformt werden,
Montagemittel zum Montieren der Stringerelemente (6), indem die Stringerelemente (6) in Längsrichtung derart zusammengeführt werden, dass die Längsseiten der Stringerelemente (6) im Wesentlichen parallel ausgerichtet sind, um eine Stringereinheit (7) auszubilden,
Härtungsmittel (9) zum Co-Härten der faserverstärkten Haut (8) und der Stringereinheit (7), um eine stringerverstärkte Verbundhaut auszubilden.

12. Automatische Produktionslinie, die das Herstellungsverfahren nach einem der Ansprüche 1 bis 9 verwendet.

## Revendications

1. Procédé de fabrication de peaux composites renforcées par des lisses, **caractérisé en ce que** le procédé comprend les étapes consécutives consistant à :
fournir un outil de formage (1) comprenant des éléments de support allongés (2) espacés au moyen d'éléments factices allongés (3), lesdits éléments de support et factices (2, 3) étant assemblés côte à côte longitudinalement de sorte que les côtés longs des éléments de support et factices (2, 3) soient essentiellement alignés parallèlement ;
dans une première étape de placement de fibres, placer une résine renforcée de fibres sur ledit outil de formage (1) pour former une peau renforcée de fibres (4) sur ledit outil de formage (1) ;
découper ladite peau renforcée de fibres le long de l'extension longitudinale des éléments factices (3) de manière à découper des matériaux bruts renforcés de fibres (5) pour des éléments de type lisses (6) ;
retirer lesdits éléments factices (3) ;
former lesdits matériaux bruts renforcés de fibres (5) de telle sorte que les matériaux bruts renforcés de fibres (5) soient façonnés autour desdits éléments de support (2) pour former des éléments de type lisses (6) ;
assembler lesdits éléments de type lisses (6), en réunissant longitudinalement lesdits éléments de type lisses de telle sorte que les côtés longs des éléments de type lisses soient essentiellement alignés parallèlement pour former une unité de lisses (7) ;
dans une deuxième étape de placement de fibres, placer une résine renforcée de fibres sur ladite unité de type lisses (7) pour former une peau renforcée de fibres (8) sur ladite unité de lisses (7) ;
co-durcir ladite peau renforcée de fibres (8) et ladite unité de lisses (7) pour former une peau composite renforcée par des lisses ; et
retirer lesdits éléments de support (2) pour former ladite peau composite renforcée par des lisses.

2. Procédé de fabrication selon la revendication 1, dans lequel chaque élément de support (2) comprend un bloc de support (2a) et une plaque de chargement (2b), dans lequel ladite plaque de chargement (2b) est disposée le long de la longueur du bloc de support (2a) de manière à renfermer au moins la partie supérieure du bloc support (2a).

3. Procédé de fabrication selon la revendication 2, dans lequel les blocs de support (2a) sont enlevés avant l'étape de durcissement, et dans lequel les plaques de chargement (2b) de l'élément de support (2) sont enlevées après durcissement.

4. Procédé de fabrication selon l'une quelconque des revendications précédentes, dans lequel l'étape consistant à placer une résine renforcée de fibres comprend la mise en place de fibres pré-imprégnées.

5. Procédé de fabrication selon l'une quelconque des revendications précédentes, dans lequel l'étape consistant à placer une résine renforcée de fibres est réalisée au moyen d'une stratification automatisée de la bande (ATL) et / ou du placement automatisé de fibres (AFP).

6. Procédé de fabrication selon l'une quelconque des revendications précédentes, dans lequel l'étape consistant à placer une résine renforcée de fibres comprend la mise en place de fibres dans une pluralité de couches le long d'une pluralité de directions.

7. Procédé de fabrication selon l'une quelconque des revendications précédentes, dans lequel les matériaux bruts renforcés de fibres (5) pour les éléments de type lisses (6) sont découpés au moyen d'un couteau à ultrasons.

8. Procédé selon l'une quelconque des revendications précédentes, dans lequel l'étape de formation comprend la réalisation d'une formation de drapé à chaud (HDF).

9. Procédé de fabrication selon l'une quelconque des revendications précédentes, dans lequel l'étape de co-durcissement est réalisée au moyen d'un outil de durcissement (9) personnalisé pour accueillir la peau renforcée de fibres (8) et l'unité de lisses (7) formant, lors du co-durcissement, la peau composite renforcée par des lisses.

10. Procédé selon l'une quelconque des revendications précédentes, dans lequel l'étape de co-durcissement est réalisée dans un four autoclave.

11. Dispositif pour la fabrication d'une peau composite renforcée par des lisses comprenant :
un outil de formage (1) comprenant des éléments de support allongés (2) espacés au moyen d'éléments factices allongés (3), lesdits éléments de support et factices (2, 3) étant assemblés côte à côte longitudinalement de sorte que les côtés longs des éléments de support et factices (2, 3) soient essentiellement alignés parallèlement ;
des moyens de placement de fibres pour placer une résine renforcée de fibres ;
des moyens de coupe pour découper des matériaux bruts renforcés de fibres (5) pour des éléments de type lisses (6), découpant ladite peau renforcée de fibres le long de l'extension longitudinale des éléments factices (3) ;
des moyens d'écartement pour retirer des éléments de support et / ou factices (2, 3),
des moyens de formation pour former lesdits matériaux bruts renforcés de fibres (5) de telle sorte que les matériaux bruts renforcés de fibres soient façonnés autour desdits éléments de support pour former des éléments de type lisses (6) ;
des moyens d'assemblage pour assembler lesdits éléments de type lisses (6), en réunissant longitudinalement les éléments de type lisses (6) de telle sorte que les côtés longs des éléments de type lisses (6) soient essentiellement alignés parallèlement pour former une unité de lisses (7) ;
des moyens de durcissement (9) pour co-durcir ladite peau renforcée de fibres (8) et ladite unité de lisses (7) pour former une peau composite renforcée par des lisses.

12. Chaîne de production automatique utilisant le procédé de fabrication selon l'une quelconque des revendications 1 à 9.
